# EUROPEAN PATENT APPLICATION

(11) **EP 4 717 354 A1**
(43) Date of publication of application: **01.04.2026**
(21) Application number: 24306571.1
(22) Date of filing: 26.09.2024
(51) Int. Cl.: B01J 45/00, B01J 47/016, B01J 49/05, B01J 49/50, B01J 39/07, B01J 39/20, B01J 49/06, B01J 49/53, C02F 1/42, C02F 101/14

(54) **ION EXCHANGE REGENERATION METHOD**

(71) Applicant: ImerTech SAS, 75015 Paris (FR)
(72) Inventor: The designation of the inventor has not yet been filed
(74) Representative: Faure-Geors, Vanessa

(57) **Abstract**

The present invention provides, *inter alia*, a method for regenerating an ion exchange resin which is at least partially loaded with fluoride ions in an ion exchange vessel, wherein said ion exchange resin is a metal ion-doped chelating resin comprising amino-phosphonate groups.

## Description

The present invention relates to a method of regenerating an ion exchange resin. Specifically, the method relates to regenerating an ion exchange resin which has been at least partially loaded with fluoride. The ion exchange resin is a chelating resin comprising amino-phosphonate groups, which has been doped with metal ions such as aluminium. The ion exchange resin is housed in an ion exchange vessel such as a tank or column.

### BACKGROUND OF INVENTION

Fluoride can be present in wastewater discharge or in process water from manufacturing industries such as chemical industries and/or such as those making semiconductors, photovoltaic panels, glass, steel, aluminium, pesticides and fertilizers, and from certain mining operations. While small amounts of fluoride in water supplies are acceptable (typically 1 ppm or less), where there is a risk of waste discharge contaminating a water supply with excess fluoride, then the waste stream must be treated. Similarly, where fluoride content is detrimental to production equipment or final product specification, process water must be treated.

An effective method of fluoride removal is precipitation, typically using a calcium salt. However, the fluoride concentration of the treated output may still be beyond acceptable limits. Methods to further reduce the concentration of fluoride include adsorption techniques, and use of an ion exchange material.

Ion exchange materials can be used to remove impurities from a solution, where the impurities are ionized and soluble in the solution. Broadly speaking, the principle of ion exchange involves exchanging the ionized impurities for ions of the same charge, that have no negative impact on the resulting solution. A typical ion exchange system comprises vessels such as a tank or column filled with an ion exchange material (typically known as an ion exchange resin) formed of very small, highly porous beads that are functionalised to have fixed ions permanently attached to their surface. The fixed ions are associated with mobile counterions of the opposite charge, which are typically of the same polarity as the ionized impurities. The ionized impurities have a greater affinity for the fixed ions than the counterions, and hence as a solution containing the ionized impurities is passed through the ion exchange vessel containing the ion exchange resin, the ionized impurities displace the counterions. The counterions are removed along with the treated solution, while the ionized impurities remain attached to the ion exchange material. The treated solution may be passed through the ion exchange vessel multiple times until the desired impurity concentration is reached.

At some point in the process, a significant proportion of the mobile counterions of the ion exchange material will have been replaced by the ionized impurities, at which point the ion exchange material must be regenerated. The exact method of regeneration will vary depending on the nature of the fixed and mobile ions, but typically involves running a concentrated solution of ions having the same polarity as the impurity through the ion exchange vessel, which strips the impurity ions into solution, until a new equilibrium is established.

Strong base anion resins having fixed cations such as quaternary ammonium salts and mobile anions such as chloride can be used to remove fluoride from solutions (fluoride being more electronegative than chloride, and hence having a greater affinity for the fixed ions), but such processes can have low efficiency due competition from other anions such as carbonates and nitrates which may be present in the solution. In cases such as these, the use of a chelating-type resin which has been doped with cations such as metal ions is recommended. A suitable resin of this type is one bearing chelating amino-phosphonate groups. As phosphonate groups have a high affinity for multivalent metal cations, in particular for those having valence of at least three such as aluminium, the resin can be doped with such multivalent metal ions, and the resulting activated resin can then be used for fluoride removal.

The recommended protocol for regenerating metal ion-doped amino-phosphonate resins is treatment with a strong acid to strip out the metal fluoride (in the case of aluminium fluoride, a multivalent metal complex) from the resin, followed by treatment with a strong base to regenerate the original amino-phosphonate surface. The resin must then be re-doped with multivalent metal ions to form the activated resin.

While the regeneration process is effective, it is desirable to improve the efficiency of the process in terms of amounts of reagents used, both for economic reasons (avoiding costly reagents) and environmental reasons (such reagents being typically strong bases and acids).

### SUMMARY OF THE INVENTION

According to a first aspect of the present invention, there is provided a method for regenerating an ion exchange resin which is at least partially loaded with fluoride ions in an ion exchange vessel, wherein said ion exchange resin is a metal ion-doped chelating resin comprising amino-phosphonate groups;
the method comprising subjecting the ion exchange resin to the following steps:
i. passing a first solution through the ion exchange vessel, wherein the first solution has pH between about pH 8.0 and about pH 10.0; and
ii. passing a second solution through the ion exchange vessel, wherein the second solution has pH between about pH 2.5 and about pH 7.5.

### BRIEF DESCRIPTION OF FIGURES

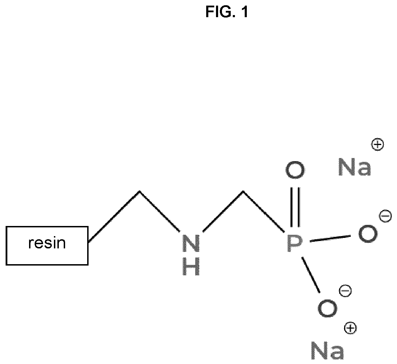

Figure 1 illustrates an amino-phosphonate group bound to a resin.

### DETAILED DESCRIPTION

As described in the background of invention, chelating ion exchange resins having amino-phosphonate groups (designated herein as "Resin I") can be doped with multivalent metal ions, and the resulting activated resin (designated herein as "Resin A") can then be used for fluoride removal. Resin I can be doped to form Resin A by treating with a multivalent metal ion salt. The salt counterion is typically monovalent (e.g. AlCl₃) or divalent (e.g. Al₂(SO₄)₃), as shown in Scheme 1 below.

### Scheme 1: Activation of amino-phosphonate resin by trivalent metal ion doping

### Monovalent anionic counterion

| | | | |
|---|---|---|---|
| | Resin I + trivalent metal salt | → | Resin A + monovalent counterion salt |
| | (R-PO₃²⁻,2Mₐ⁺) + M_{b}³⁺(X⁻)₃ | → | (R-PO₃²⁻,M_{b}³⁺X⁻) + 2Mₐ⁺X⁻ |
| e.g. | (R-PO₃²⁻,2Na⁺) + AlCl₃ | → | (R-PO₃²⁻,Al³⁺Cl⁻) + 2NaCl |

### Divalent anionic counterion

| | | | |
|---|---|---|---|
| | Resin I + trivalent metal salt | → | Resin A + divalent counterion salt |
| | 2(R-PO₃²⁻,2Mₐ⁺) + (M_{b}³⁺)₂(X²⁻)₃ | → | (2R-PO₃ ²⁻,2M_{b} ^{3+,}X²⁻) + 2((Mₐ⁺)₂X²⁻) |
| e.g. | 2(R-PO₃²⁻,2Na⁺) + Al₂(SO₄)₃ | → | (2R-PO₃²⁻,2Al³⁺,SO₄²⁻) + 2(Na₂SO₄) |

Mₐ⁺ is a monovalent cation (Na⁺ in the example) and M_{b}³⁺ is a trivalent cation (Al³⁺ in the example).

In Scheme 1 and the Schemes that follow, "RPO₃²⁻" represents an amino-phosphonate group which is bound to the resin, an example of which is shown in Figure 1, where "R" is -CH₂NHCH₂-.

The activated resin (Resin A) can then be used to remove fluoride ions from a solution. As the solution containing fluoride (typically a wastewater solution) is passed through the activated ion exchange resin (Resin A), the mobile anions (X- or X²⁻) are exchanged for fluoride ions for form resin which is loaded with fluoride ions (Resin L), as shown in Scheme 2 below.

### Scheme 2: Ion exchange with fluoride ions (also known as "loading")

### Monovalent anionic counterion

| | | | |
|---|---|---|---|
| | Resin A + fluoride ions | → | Resin L + monovalent anionic counterions |
| | (R-PO₃²⁻,M_{b}³⁺X⁻) + F⁻ | → | (R-PO₃²⁻,M_{b}³⁺F⁻) + X⁻ |
| e.g. | (R-PO₃²⁻,Al³⁺Cl⁻) + F⁻ | → | (R-PO₃²⁻,Al³⁺F⁻) + Cl⁻ |

### Divalent anionic counterion

| | | | |
|---|---|---|---|
| | Resin A + fluoride ions | → | Resin L + divalent anionic counterions |
| | (2R-PO₃²⁻,2M_{b}³⁺,X²⁻) + 2F⁻ | → | 2(R-PO₃²⁻,M_{b}³⁺,F⁻) + X²⁻ |
| e.g. | (2R-PO₃²⁻,2Al³⁺,SO₄²⁻) + 2F⁻ | → | 2(R-PO₃²⁻,Al³⁺,F⁻) + SO₄²⁻ |

The recommended protocol for regenerating metal fluoride ion-doped amino-phosphonate resins (Resin L) is treatment with a strong acid (having pH < 1) to strip out the metal fluoride (forming Resin H), followed by treatment with a strong base (having pH > 13) to regenerate the original amino-phosphonate surface (Resin I). The resin must then be re-doped with metal ions to form the activated resin (Resin A).

These sequences are set out in Scheme 3 below, which shows two separate sequences, one sequence involving an activated resin having a trivalent metal ion with a monovalent anionic counterion (e.g. AlCl₃) and the other sequence involving a trivalent metal ion with a divalent anionic counterion (e.g. Al₂SO₄)₃. In practice the valency of the counterion is not significant, but in order to demonstrate the stoichiometric equivalents of reagents used (which is the same for both sequences), it is helpful to illustrate both alternatives. For simplicity, the trivalent metal salt anions and strong acid anions are illustrated as being the same (X- or X²⁻), as are the phosphonate cations and basic cations (Mₐ⁺).

### Scheme 3: Known recommended regeneration sequence

### Monovalent anionic counterion

### Step 1: Strong acid regeneration

| | | | |
|---|---|---|---|
| | Resin L + strong acid | → | Resin H + trivalent metal ion salt |
| | (R-PO₃²⁻,M_{b}³⁺F⁻) + **2H⁺X⁻** | → | (R-PO₃²⁻,2H⁺) + M_{b}³⁺F⁻(X⁻)₂ |
| e.g. | (R-PO₃²⁻,Al³⁺,F⁻) + **2HCl** | → | (R-PO₃²⁻,2H⁺) + AlF(Cl)₂ |

### Step 2: Strong base phosphonate formation

| | | | |
|---|---|---|---|
| | Resin H + base | → | Resin I + water |
| | (R-PO₃²⁻,2H⁺) + **2Mₐ⁺OH⁻** | → | (R-PO₃²⁻,2Mₐ⁺) + 2H₂O |
| e.g. | (R-PO₃²⁻,2H⁺) + **2NaOH** | → | (R-PO₃²⁻,2Na⁺) + 2H₂O |

### Step 3: Activation of amino-phosphonate resin by trivalent metal ion doping

| | | | |
|---|---|---|---|
| | Resin I + trivalent metal salt | → | Resin A + monovalent counterion salt |
| | (R-PO₃²⁻,2Mₐ⁺) + **M_{b}³⁺(X⁻)₃** | → | (R-PO₃²⁻,M_{b}³⁺X⁻) + 2Mₐ⁺X⁻ |
| e.g. | (R-PO₃²⁻,2Na⁺) + **AlCl₃** | → | (R-PO₃²⁻,Al³⁺Cl⁻) + 2NaCl |

### Divalent anionic counterion

### Step 1: Strong acid regeneration

| | | | |
|---|---|---|---|
| | Resin L + strong acid | → | Resin H + trivalent metal ion salt |
| | 2(R-PO₃²⁻,M_{b}³⁺,F⁻) + **2((H⁺)₂X²⁻)** | → | 2(R-PO₃²⁻,2H⁺) + (M_{b}³⁺)₂(F⁻)₂(X²⁻)₂ |
| e.g. | 2(R-PO₃²⁻,Al³⁺,F⁻) + **2H₂SO₄** | → | 2(R-PO₃²⁻,2H⁺) + Al₂(SO₄)₂F₂ |

### Step 2: Strong base phosphonate formation

| | | | | |
|---|---|---|---|---|
| | Resin H + base | | → | Resin I + water |
| | 2(R-PO₃²⁻,2H⁺) + **4Mₐ⁺OH⁻** | → | 2(R-PO₃²⁻,2Mₐ⁺) + 4H₂O | |
| e.g. | 2(R-PO₃²⁻,2H⁺) + **4NaOH** | → | 2(R-PO₃²⁻,2Na⁺) + 4H₂O | |

### Step 3: Activation of amino-phosphonate resin by trivalent metal ion doping

| | | | |
|---|---|---|---|
| | Resin I + trivalent metal salt | → | Resin A + divalent counterion salt |
| | 2(R-PO₃²⁻,2Mₐ⁺) + **(M_{b}³⁺)₂(X²⁻)₃** | → | (2R-PO₃²⁻,2M_{b}³⁺,X²⁻) + 2((Mₐ⁺)₂X²⁻) |
| e.g. | 2(R-PO₃²⁻,2Na⁺) + **Al₂(SO₄)₃** | → | (2R-PO₃²⁻,2Al³⁺,SO₄²⁻) + 2(Na₂SO₄) |

The present inventors have discovered a significantly simplified "soft" regeneration process in which the number of steps is reduced and the amount of reagents is reduced, providing both environmental and economic benefits.

The inventive regeneration sequences are set out below in Scheme 4 which again shows two separate sequences, one sequence involving an activated resin having a trivalent metal ion with a monovalent anionic counterion (e.g. AlCl₃) and the other sequence involving a trivalent metal ion with a divalent anionic counterion (e.g. Al₂SO₄)₃.

### Scheme 4: Regeneration sequence of the present invention

### Monovalent anionic counterion

### Step 1: Soft basic regeneration

| | | | |
|---|---|---|---|
| | Resin L + base | → | Resin B + fluoride salt |
| | (R-PO₃²⁻,M_{b}³⁺,F⁻) + **Mₐ⁺OH⁻** | → | (R-PO₃²⁻, M_{b}³⁺,OH⁻) + Mₐ⁺F⁻ |
| e.g. | (R-PO₃²⁻,Al³⁺,F⁻) + **NaOH** | → | (R-PO₃²⁻, Al³⁺, OH⁻) + NaF |

### Step 2: Soft acidic neutralization/activation

| | | | |
|---|---|---|---|
| | Resin B + acid | → | Resin A + water |
| | (R-PO₃²⁻, M_{b}³⁺,OH⁻) + **H⁺X⁻** | → | (R-PO₃²⁻,2M_{b}³⁺,X⁻) + H₂O |
| e.g. | (R-PO₃²⁻, Al³⁺, OH-) + **HCl** | → | (R-PO₃ ²⁻,Al³⁺Cl⁻) + H₂O |

### Divalent anionic counterion

### Step 1: Soft basic regeneration

| | | | |
|---|---|---|---|
| | Resin L + base | → | Resin B + fluoride salt |
| | 2(R-PO₃²⁻,M_{b}³⁺,F⁻) + **2(Mₐ⁺OH⁻)** | → | 2(R-PO₃²⁻, M_{b}³⁺,OH⁻) + 2(Mₐ⁺F⁻) |
| e.g. | 2(R-PO₃²⁻,Al³⁺,F⁻) + **2NaOH** | → | 2(R-PO₃²⁻, Al³⁺, OH-) + 2NaF |

### Step 2: Soft acidic neutralization/activation

| | | | |
|---|---|---|---|
| | Resin B + acid | → | Resin A + water |
| | 2(R-PO₃²⁻, M_{b}³⁺,OH⁻) + **(H⁺)₂X²⁻** | **→** | (2R-PO₃²⁻,2M_{b}³⁺X²⁻) + 2H₂O |
| e.g. | 2(R-PO₃²⁻, Al³⁺, OH⁻) + **H₂SO₄** | **→** | (2R-PO₃²⁻,2Al³⁺,SO₄²⁻) + 2H₂O |

It can be seen that in the known regeneration method shown in Scheme 3, the fluoride is stripped from the resin using strongly acidic conditions (about pH 1), which simultaneously removes the trivalent metal ion, leaving a resin form (Resin H) which must be treated with base (strongly basic conditions, pH about 13) and then reactivated i.e. three steps in total are required to regenerate activated Resin A.

In contrast, the regeneration method of the present invention shown in Scheme 4 uses a soft basic regeneration step to remove the fluoride, leaving the trivalent metal ion largely attached to the resin (Resin B). The use of moderate basic conditions (pH 8.0 to 10.0) sufficiently destabilizes the metal-fluoride complex such that fluoride is displaced, but retains the amino-phosphonate-metal complex to such a degree that the metal ions are not displaced to a significant degree. The activated resin (Resin A) can then be formed by an acidification/neutralization step in which Resin B is treated with a more acidic solution, avoiding very acidic conditions (restricted pH from 2.5 to 7.5).

As such, the regeneration sequence of the present invention is shortened, and as shown in Table 1 below uses fewer, and lower quantities of reagents.

**Table 1: comparison of molar quantities (per mole of resin) of acid, base and trivalent metal ions required for regeneration**

| **Regeneration process** | **H⁺ (total)** | **H⁺ (stoic.)** | **OH⁻ (total)** | **OH⁻ (stoic.)** | **M_{b}³⁺ (total)** | **M_{b}³⁺ (stoic.)** |
|---|---|---|---|---|---|---|
| Scheme 3 (known) monovalent | 2 | 2 | 2 | 2 | 1 | 1 |
| Scheme 3 (known) divalent | 4 | 2 | 4 | 2 | 2 | 1 |
| Scheme 4 (Invention) monovalent | 1 | 1 | 1 | 1 | 0 | 0 |
| Scheme 4 (Invention) divalent | 2 | 1 | 2 | 1 | 0 | 0 |

In fact, the known recommended regeneration sequence shown in Scheme 3 actually consumes much higher quantities of acids and bases than displayed in Table 1. This is because in practice the known sequence requires the pH of the solutions to go below pH 1 and beyond pH 13. As such, the savings involved in the method of the present invention are considerably higher than the stochiometric savings shown in Table 1.

The term "soft basic" or "moderate basic" solution in the context of this application refers to a solution which has pH between about pH 8.0 and about pH 10.0.

The term "soft acidic" or "moderate acidic" solution in the context of this application refers to a solution which has pH between about pH 2.5 and about pH 7.5. While it is appreciated that a solution having pH of 7 and above is not generally considered as being acidic, the term "acidic" in the context of the present application is used because the second solution functions to acidify/neutralize the basic solution of step i).

In the context of the present invention, pH of a solution is measured at room temperature, i.e. about 25 °C, using a pH probe such as described in the Examples.

The ion exchange resin used in the methods of the invention is a metal ion-doped chelating resin comprising amino-phosphonate groups. The term "amino-phosphonate" in the context of this application encompasses groups with a phosphonate group (P=O(O⁻)(O⁻)), a phosphonic acid group (P=O(OH)(OH)) and alkyl phosphonates (e.g. P=O(OH)(OR) and P=O(O-)(OR)). The amino-phosphate groups are suitably aminoalkyl phosphonate groups.

In one embodiment, the amino phosphonate groups comprise the following moiety:

R^{a}-NR^{b}-(CR^{c}R^{d})₁₋₆-P=O(OR¹)(OR²).

As shown, R^{a} is a bond to the bulk material or core of the ion exchange resin, preferably via a linker, e.g. an alkylene linker such as C₁₋₆ alkylene, in particular -CH₂-. R^{b} is typically H or C₁₋₃ alkyl, and in particular is H. Alternatively, R^{b} can be -(CR^{c}R^{d})₁₋₆-P=O(OR¹)(OR²) (wherein R^{c}, R^{d}, R¹ and R² are as defined herein).

The amino-phosphate groups are suitably aminoalkyl phosphonate groups and R^{c} and R^{d} are independently selected from the group consisting of H and C₁₋₃ alkyl, and are suitably both H. Suitably, amino-phosphonate group is an aminomethyl phosphonate group (e.g. of formula NR^{a}R^{b}-(CH₂)₁-P=O(OR¹)(OR²), an aminoethyl phosphonate group (e.g. of formula NR^{a}R^{b}-(CH₂)₂-P=O(OR¹)(OR²)) or an aminopropyl phosphonate group (e.g. of formula NR^{a}R^{b}-(CH₂)₃-P=O(OR¹)(OR²)).

R¹ and R² are independently selected from H, C₁₋₃ alkyl, and M; where M is a metal ion (i.e. the oxygen is ionized e.g. -O⁻M⁺). Suitably, at least one of R¹ and R²⁺ is H or M.

In form Resin I, R¹ and R² are suitably both M, where M is suitably a monovalent metal ion e.g. the amino-phosphonate group is of formula NR^{a}R^{b}-CR^{c}R^{d}-P=O(O⁻M⁺)(O⁻M⁺) e.g. NR^{a}H-CH₂-P=O(O⁻Na⁺)(O⁻Na⁺).

In form Resin A, R¹ and R² are suitably both M, where M is suitably a trivalent metal ion, wherein a single trivalent metal ion chelates to both oxygen atoms e.g. the amino-phosphonate group is of formula NR^{a}R^{b}-CR^{c}R^{d}-P=O(O⁻)₂(M³⁺) e.g. NR^{a}H-CH₂-P=O(O⁻)₂Al³⁺. Although not shown, the trivalent metal ion is also chelated to an anion e.g. X-. In Resin L, the trivalent metal ion is also chelated to a fluoride ion. In Resin B, the trivalent metal ion is also chelated to a hydroxide ion.

In Resin H, R¹ and R² are both H.

Further amino-phosphonate forms may be formed as intermediates in the methods of the invention e.g. wherein R¹ is H and R² is M, or wherein R¹ is M and R² is H. Methods involving amino-phosphonates wherein one of R¹ and R² is C₁₋₃ alkyl and the other is H or M are also envisaged.

In one embodiment, the amino-phosphonate groups are of formula NR^{a}H-(CH₂)₁₋₆-P=O(OR¹)(OR²), wherein R^{a}, R¹ and R² are as defined hereinabove.

The method of the invention involves subjecting the ion exchange resin as defined herein to the following steps:
i. passing a first solution through the ion exchange vessel, wherein the first solution has pH between about pH 8.0 and about pH 10.0; and
ii. passing a second solution through the ion exchange vessel, wherein the second solution has pH between about pH 2.5 and about pH 7.5.

In step i), suitably the first solution has pH between about pH 8.5 and about pH 9.5, preferably about pH 9.0. Typically, the solution contains a base, such as an alkaline hydroxide, for example sodium hydroxide (NaOH), potassium hydroxide (KOH) or lithium hydroxide (LiOH).

Mixtures of bases are also contemplated, provide the required pH condition is met. Preferably the first solution comprises NaOH. The first solution is an aqueous solution.

In step ii), the second solution has pH between about pH 2.5 and about pH 7.5, preferably between about pH 3.0 and about pH 5.5. The solution suitably contains an acid, e.g. hydrochloric acid (HCl) or sulfuric acid (H₂SO₄). Mixtures of acids are also contemplated. The second solution can also be the loading solution containing fluoride ions, provided the loading solution has pH between about pH 2.5 and about pH 7.5 and is highly concentrated in sulphate (SO₄²⁻) ions. The second solution is an aqueous solution. Preferably, the second solution comprises SO₄². More preferably, the second solution has a molar concentration [SO₄²⁻] between about 50 g/L and about 200 g/L.

As explained above, the chelating resin is metal ion-doped, suitably with multivalent metal cations, where the valence is at least 3. In one embodiment, the multivalent metal cations have valence of 3 or 4. Mixtures of metal ions are contemplated e.g. the multivalent metal cations can be a mixture of metal cations having valence of 3, and metals cations having a valence of 4. In one embodiment, the multivalent metal ions have valence of 3.

In one embodiment, the multivalent metal cations are selected from the group consisting of aluminium, zirconium, chromium, and mixtures thereof. Suitably, the multivalent metal ions are aluminium ions, zirconium ions or a mixture thereof. Preferably, the multivalent metal ions are aluminium ions. In one embodiment, the chelating resin comprising amino-phosphonate groups has been doped with aluminium sulfate (Al₂(SO₄)₃) or aluminium chloride (AlCl₃), in particular aluminium sulfate (Al₂(SO₄)₃).

When a metal ion-doped chelating resin is used for the first time, following a first loading step (i.e. purification of a fluoride-containing solution) the first regeneration may be a conventional strong regeneration process, as described hereinabove. In subsequent cycles, the soft regeneration process of the present invention is used, and as shown in Example 1, the fluoride-capacity of the resin is not downgraded i.e. the soft regeneration protocol performs just as well as the strong regeneration protocol, but uses significantly lower levels of materials.

It should be noted that in the context of the present application, when referring to a range of between about "AA" and about "BB", the point values of AA and BB are intended to be included as possible values in the range.

### ABBREVIATIONS

- BV: bed volume
- DI: deionized
- DVB: divinylbenzene
- meq: mass balance
- ppm: parts per million

The invention is further illustrated by means of the following non-limiting examples.

### EXAMPLES

### Materials

Lanxess TP260 Monoplus Na-form resin was purchased from Lanxess, and has the following properties:

**Table 2: Ion exchange resin properties**

| | |
|---|---|
| **Name** | TP260 MonoPlus |
| **Type** | Weakly acidic action / chelating resin |
| **Matrix** | Macroporous, polystyrenic, DVB crosslinked |
| **Bead size (µm)** | 630 ± 5 |
| **Functional groups** | Amino phosphinic acid |
| **Total capacity (meq/l resin)** | 2400 |

meq is the mass balance relative to 1 litre of resin.

### Evaluation methods

### pH measurement

pH is measured using an Environmental Express Waterproof pH Electrode with ATC, Double-Junction, Epoxy-Body, Gel-Filled, available from Cole-Parmer^{®} at 25 °C.

### Example 1 - Ion exchange column preparation and activation

A three-column carousel system in lead-lag configuration was constructed. Each ion exchange column (400 cm² cross section; 50 cm length) was filled with 20 liters of Lanxess TP260 Monoplus Na-form resin (details above). In this configuration, 1 bed volume (BV) = 20 L. The ion exchange resin was activated by adding 1 M aluminium sulfate (3 BV).

The system was then used to purify a feeding solution containing fluoride as an impurity, having the composition set out in Table 3. The purification step can also be referred to as the loading step, as fluoride is loaded onto the resin.

**Table 3:**

| **Ion** | **Concentration (ppm)** |
|---|---|
| [F] | 115 |
| [Na] | 15,000-35,000 |
| [K] | 25,000-40,000 |
| [SO₄] | 40,000-70,000 |
| Cl | 1,000-3000 |

During the loading step, the pH of the feeding solution was buffered at pH 5 for 8-12 BV (flowrate of 2-5 BV/h), and then held at pH 7 for 88-92 BV (flowrate 2-5 BV/h). The loading step was carried out a temperature between 70 °C and 75 °C.

The first regeneration cycle (Cycle 0) was carried out using the known strong acid/strong base protocol set out in Table 4 below, and was carried out at room temperature.

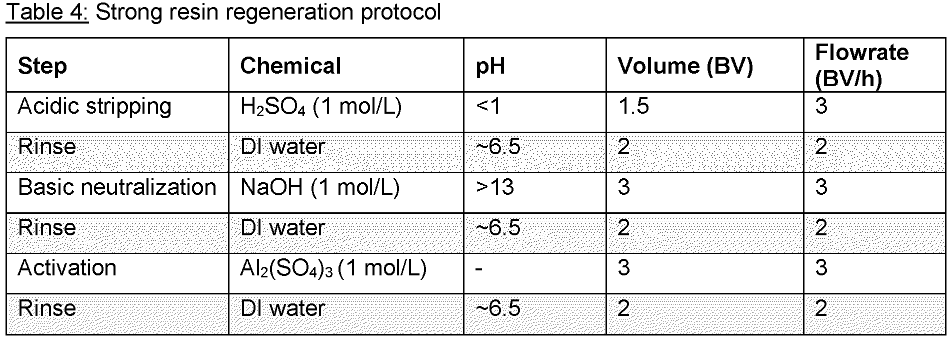

During subsequent cycles, following a loading step, once the fluoride concentration in the solution exiting the system was above 10 ppm, the ion exchange resin was regenerated using a "soft" regeneration protocol, as set out in Table 5 below, which was carried out at room temperature.

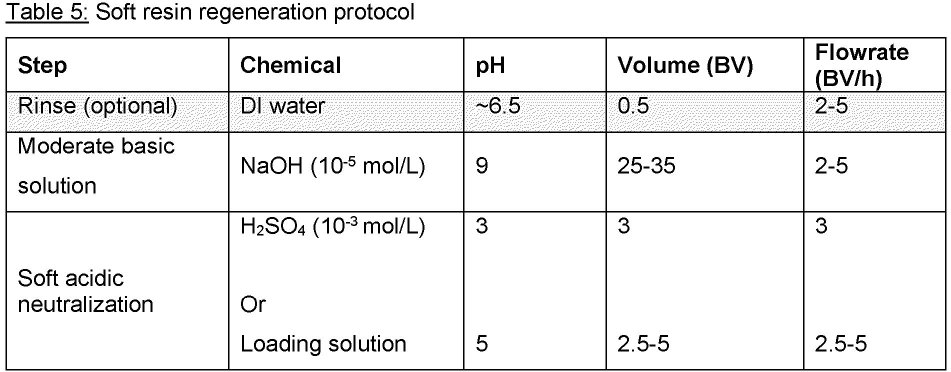

In the soft acidic neutralization step, an aqueous solution of acid (e.g. H₂SO₄ or HCl) having pH between about pH 2.5 and about pH 7.5 can be used. As an alternative, when the loading solution is buffered to a pH between about pH 2.5 and pH 7.5 (e.g. to -pH 5), it can also be used to neutralize the resin material following the moderate basic conditions step i.e. the loading step of the next cycle involves *in situ* neutralization of the resin.

A total of 12 cycles were carried out using the inventive "soft" regeneration protocol (with addition of DI-water in the soft acidic neutralization step), and no downgrade of the resin capacity was observed, as shown in Table 6:

**Table 6:**

| **Cycle #** | **F resin capacity (meq/L resin)** | **BV Loading** |
|---|---|---|
| 3 | 264.4 | 104.4 |
| 4 | 263.7 | 132.7 |
| 5 | 281.5 | 91.7 |
| 6 | 244.0 | 106.35 |
| 7 | 211.1 | 82.35 |
| 8 | 171.2 | 96.6 |
| 9 | 294.8 | 87.4 |
| 10 | 158.3 | 72.6 |
| 11 | 251.9 | 104.65 |
| 12 | 210.4 | 87.15 |

### Cycles 1 and 2 are not represented as they do not represent steady states of the ion exchange process.

During this 12-cycle sequence, compared to using a conventional sequence using only strong resin regeneration conditions, the following savings per cycle were obtained: 99.000% H₂SO₄, 99.992% NaOH and 100% Al₂(SO₄)₃.

The process has been repeated using a combination of strong and soft regeneration conditions. It was found that when a single strong regeneration cycle was carried out every 10 cycles using soft regeneration, the following savings per cycle were obtained: 89.000% H₂SO₄, 89.992% NaOH and 90.909% Al₂(SO₄)₃. When a single strong regeneration cycle was carried out every 20 cycles using soft regeneration, the following savings per cycle were obtained: 94.500% H₂SO₄, 94.996% NaOH and 95.238% Al₂(SO₄)₃.

## Claims

1. A method for regenerating an ion exchange resin which is at least partially loaded with fluoride ions in an ion exchange vessel, wherein said ion exchange resin is a metal ion-doped chelating resin comprising amino-phosphonate groups;
the method comprising subjecting the ion exchange resin to the following steps:
i. passing a first solution through the ion exchange vessel, wherein the first solution has pH between about pH 8.0 and about pH 10.0; and
ii. passing a second solution through the ion exchange vessel, wherein the second solution has pH between about pH 2.5 and about pH 7.5.

2. The method according to claim 1, wherein the chelating resin comprising amino-phosphonate groups is doped with multivalent metal cations, where the valence is at least 3.

3. The method according to claim 2, wherein the chelating resin comprising amino-phosphonate groups is doped with multivalent metal cations, where the valence is 3 or 4, and is preferably 3.

4. The method according to claim 3, wherein the multivalent metal cations are selected from the group consisting of aluminium, zirconium, and chromium, and are preferably aluminium ions.

5. The method according to claim 4, wherein the chelating resin comprising amino-phosphonate groups has been doped with aluminium sulfate (Al₂(SO₄)₃) or aluminium chloride (AlCl₃), preferably aluminium sulfate (Al₂(SO₄)₃).

6. The method according to any one of claims 1 to 5, wherein the amino-phosphonate groups are aminoalkyl phosphonate groups.

7. The method according to claim 6, wherein the aminoalkyl phosphonate groups are selected from the group consisting of an aminomethyl phosphonate group, an aminoethyl phosphonate group and an aminopropyl phosphonate group.

8. The method according to any one of claims 1 to 6, wherein the amino phosphonate groups comprise the following moiety:
-NR^{b}-(CR^{c}R^{d})₁₋₆-P=O(OR¹)(OR²)
wherein,
R^{b} is H, C₁₋₃ alkyl or -(CR^{c}R^{d})₁₋₆-P=O(OR¹)(OR²);
R^{c} and R^{d} are independently selected from the group consisting of H and C₁₋₃ alkyl;
R¹ and R² are independently selected from H, C₁₋₃ alkyl, and M;
wherein M is a metal ion.

9. The method according to any one of claims 1 to 8, wherein the first solution has pH between about pH 8.5 and about pH 9.5, preferably about pH 9.0.

10. The method according to any one of claims 1 to 9, wherein the first solution comprises a base e.g. an alkaline hydroxide, for example sodium hydroxide (NaOH), potassium hydroxide (KOH), or lithium hydroxide (LiOH), in particular sodium hydroxide (NaOH).

11. The method according to any one of claims 1 to 10, wherein the second solution has pH between about pH 3.0 and about pH 5.5.

12. The method according to any one of claims 1 to 11, wherein the second solution comprises an acid.

13. The method according to claim 12, wherein the second solution comprises hydrochloric acid (HCl) or sulfuric acid (H₂SO₄).

14. The method according to any one of claims 1 to 9, wherein the second solution is a loading solution comprising fluoride ions, wherein the loading solution has pH between about pH 2.5 and about pH 7.5.

15. The method according to any one of claims 1 to 14, wherein the ion exchange vessel is an ion exchange tank or an ion exchange column, in particular an ion exchange column.
